# EUROPEAN PATENT SPECIFICATION

(11) **EP 4 090 920 B1**
(45) Date of publication and mention of the grant of the patent: **10.04.2024**
(21) Application number: 20845621.0
(22) Date of filing: 24.12.2020
(51) Int. Cl.: G01F 23/292

(54) **SUPPORTING DEVICE FOR A DISTANCE OPTICAL SENSOR**
STÜTZVORRICHTUNG FÜR EINEN OPTISCHEN ABSTANDSSENSOR
DISPOSITIF DE SOUTIEN DESTINÉ À UN CAPTEUR OPTIQUE DE DISTANCE

(30) Priority: 24.12.2019 IT 201900025510
(43) Date of publication of application: 23.11.2022
(73) Proprietor: CBC Cad-Oil S.r.l., 20145 Milano (IT)
(72) Inventor: ADANI, Mattia, 20001 Inveruno (MI) (IT)
(74) Representative: Studio Torta S.p.A.
(86) International application number: PCT/IB2020/062430
(87) International publication number: WO 2021/130715

(56) References cited:
- EP-A1- 3 411 674
- US-A- 5 448 220
- US-B1- 6 259 516
- US-B1- 6 339 468
- US-B2- 7 768 413

## Description

### CROSS-REFERENCE TO RELATED APPLICATIONS

This Patent Application claims priority from Italian Patent Application No. 102019000025510.

### TECHNICAL FIELD

The invention relates to a supporting device for an optical distance sensor.

### BACKGROUND ART

As it is known, numerous mechanical processing operations require the use of process fluids, among which there are, for example, lubricant-refrigerant fluids to reduce friction between the processed surfaces and the tools and to disperse the produced heat, lubricant and hydraulic fluids required by the apparatuses of the machine tools, washing and protection fluids to wash and protect the pieces resulting from the processing. A portion of the aforesaid fluids unavoidably gets lost during the operation and needs to be restored by reserves that are normally stored in suitable packagings, among which there are standard steel cans according to standard ISO 15750-2, which are one of the most commonly used forms of containment of said fluids.

The cans where the fluids are stored may have different dimensions, but are anyway manufactured according to authorized standards (for instance, ISO 15750-2), in order to allow them to be more easily produced and, moreover, to prevent possible differences between a container and another from creating problems, for example when they need to be coupled to extraction pumps.

The cans are provided with standard openings in the upper part, usually two holes with a different diameter. In more automated systems, a fluid extraction apparatus (for example, a pump) is housed in the hole with the larger diameter and, therefore, the hole cannot be dedicated to other uses.

A problem that may occur, especially is relatively small-sized plants, relates to the monitoring of the quantity of fluid remaining in the cans being used. This monitoring is critical, since the lack of fluid could stop the production or lead to quality problems in the production.

Whereas large-sized plants are provided with sophisticated monitoring systems which are specifically designed according to the needs, in small-sized plants solutions of this type cannot usually be implemented, especially for cost reasons. The monitoring and the supply of reserves are carried out based on empirical procedures (such as shaking the cans in order to estimate the level of filling, mechanical measuring system that are not integrated with remote control logics or, simply, periodic manual control programs).

US 6 339 468 B1 discloses supporting device for an optical distance sensor in accordance with the preamble of claim 1. Another example of a known supporting device for an optical distance sensor is disclosed in US 6 259 516 B1.

### DISCLOSURE OF INVENTION

The object of the invention is to provide a supporting device for an optical distance sensor, which overcomes or at least attenuates the drawbacks described above.

Therefore, according to the invention, there is provided a supporting device for an optical distance sensor comprising:
a plate having an upper face and a lower face and provided with a centring structure configured to be coupled to a margin of a standard can for industrial fluids;
an optical window formed in the plate and arranged so that an optical distance sensor housed on the plate in a position corresponding to the optical window can be reached by a light radiation through the optical window;
a dome and a seat configured to receive a distance optical sensor in a calibrated operative position with respect to the plate, wherein the dome is coupled to the plate around the optical window;
wherein the centering structure is conformal to a portion of the margin of the standard can and the optical window is arranged, with respect to the centering structure, so as to be in a position corresponding to a hole of the standard can when the centering structure is coupled to the margin of the standard can;
characterized by a fan housed inside the dome.

The supporting device defined as set forth above allows an optical distance sensor to be arranged in a position that is ideal to carry out a precise measurement of the level of fluid inside the can. The positioning of the optical distance sensors, indeed, may be critical, especially for measurements on the inside of a body such as a can containing fluids. As a matter of fact, the angle of view must have a specific value and remain within a limited range of error around the vertical, so as to avoid multiple reflections on the walls of the can and on the fluid itself, which could jeopardize the result of the measurement. Furthermore, the distance sensor used for the measurement is prevented from coming into contact with the potentially aggressive fluid (for example, a corrosive fluid) contained inside the standard can.

The supporting device according to the invention, on the other hand, allows the distance sensor to be positioned in an accurate, repeatable and quick manner, as it may be kept in a fixed position relative to the plate, which, in turn, may be coupled to the standard can in a predefined position, thanks to the precise and reliable reference given by the centring structure. Therefore, the operation may be carried out without significant possibilities of error even by operators without a specific training.

Furthermore, the constructive and use simplicity make the supporting device cheap to be manufactured and suited to be also used in small-sized plants, thus allowing for an effective monitoring of reserves and improving, as a consequence, the times needed for the supply thereof as well as supporting supply models with consumption payments.

The fluids are usually supplied in standard cans. Therefore, the centring structure may conveniently be manufactured according to the type and the size of the can with which the supporting device has to be used. In other words, the production of the supporting device may advantageously be adapted to the existing standards and there is no need for a customization of the centring structure, thus avoiding significant costs.

The dome coupled to the window around the seat defines a housing, which can receive not only the distance sensor, but also possible additional sensors, for example ambient sensors useful to check whether the conditions of the fluids comply with the ranges provided for by the relative technical specifications.

The air flow conveyed by the fan avoids or at least reduces the exposure of the distance sensor to vapours and oil mists, which can be present inside the standard can and jeopardize the quality of the measurements.

According to an aspect of the invention, the plate has a first lobe extending along a longitudinal axis, a second lobe and a third lobe.

The three-lobe structure of the plate, on the one hand, allows the lobes to be used as elements of the centring structure and, on the other hand, makes it easier for the supporting device to be grabbed and handled.

According to an aspect of the invention, the first lobe, the second lobe and the third lobe are each provided with a respective supporting foot extending from the lower face of the plate.

According to an aspect of the invention, the supporting feet are symmetrically arranged relative to the longitudinal axis of the first lobe and at least the supporting foot of the first lobe is adjustable in height.

In this way, the inclination of the plate and, as a consequence, the angular position of the distance sensor may be subjected to a fine micrometric adjustment. Furthermore, the symmetrical arrangement of the feet gives stability to the supporting device.

According to an aspect of the invention, the supporting feet comprise respective magnetic elements to couple of the plate to a ferromagnetic material surface.

The magnetic elements allow for a direct coupling of the supporting device to the standard can, with no need to change the can (for example, no fixing holes need to be made) and with no need for special operations. Therefore, the fixing is extremely quick and sufficiently stable for the use of the supporting device.

According to an aspect of the invention, the second lobe and the third lobe of the plate define the centring structure and have respective distal ends adapted to a portion of the margin of the standard can.

According to an aspect of the invention, the distal ends of the first lobe and of the second lobe are shaped like arcs of circles having a radius and a centre that are the same as a radius and a centre of the standard can, respectively.

The shape of the lobes of the plate defining the centring structure allows the supporting device to be positioned in a quick and precise manner. The production can be carried out based on existing standards (for example, ISO 15750-2), with no need to adjust the centring structure depending on the needs of single end users.

According to an aspect of the invention, the plate has through openings communicating with the inside of the dome;
the dome is provided with intake ports for the fan; and
the fan is arranged within a cavity inside the dome at a distance from the plate so as to suck air from the outside through the intake ports and convey an air flow towards the inside of the standard can through the openings.

According to an aspect of the invention, the device comprises a ring projecting from the lower face of the plate, surrounding the optical window and shaped so as to adhere to the edge of the hole of the standard can.

According to an aspect of the invention, the ring has a circular shape and has a position and a diameter that are such as to allow for a sealed coupling to the edge of the vent hole of the can when the centring structure is coupled to the margin of the standard can.

According to an aspect of the invention, the ring surrounds the openings.

The ring reduces the quantity of light entering the can and, as a consequence, possible optical interferences during the measurement. Furthermore, the sealed coupling prevents dusts and foreign bodies from entering the standard can, since they could alter the fluid contained therein, besides affecting the measurements.

According to an aspect of the invention, furthermore, a sensor assembly is provided, which comprises a supporting device as defined above, an optical distance sensor housed on the supporting device and, optionally, one or more further sensors, among which there is a temperature sensor.

According to an aspect of the invention, the sensor assembly comprises a control unit coupled to the optical distance sensor and, optionally, to said one or more further sensors and provided with a communication module configured for the remote transmission of information obtained from the optical distance sensor and, optionally, from said one or more further sensors.

The sensor assembly may implement the remote monitoring of fluid reserves at the premises of one or more end users. This allows the scheduling of the supplies to be handled by a central service, for example based on contractual agreements, further simplifying the activities of end users. Furthermore, the monitoring procedure can be integrated in production processes according to modern remote control logics and to the so-called internet of things.

According to an aspect of the invention, the control unit is configured to process measurement signals obtained from the optical distance sensor and to determine a filling level of the standard can from the measurement signals.

The local processing of the measurement signals allows the information on the filling level to be directly available in the machine tool or in a monitoring station of the end user. Furthermore, further ambient values (for example, the temperature) can be acquired so as to make sure that the conditions of the fluid remain within the ranges provided for by the relative technical specifications.

According to an aspect of the invention, furthermore, there is provided a machine tool comprising a lubricant-refrigerant fluid supply system, wherein the supply system comprises:
a can having a lid provided with a hole and a projecting margin around the lid; and
a sensor assembly as defined above coupled to the margin of the can with the optical distance sensor inserted in the hole.

### BRIEF DESCRIPTION OF THE DRAWINGS

Further features and advantages of the invention will be best understood upon perusal of the following description of non-limiting embodiments thereof, with reference to the accompanying drawing, wherein:
- figure 1 is a simplified block diagram of a machine tool provided with a sensor assembly incorporating a supporting device for a distance;
- figure 2 is an enlarged plan view, from the top, of the supporting device of figure 1;
- figure 3 is a left side view of the supporting device of figure 1;
- figure 4 is an exploded perspective view of the supporting device of figure 1 with a distance sensor;
- figures 5-8 show the supporting device in use in respective configurations;
- figure 9 is a plan view, from the top, of another supporting device for a distance sensor;
- figure 10 is an exploded perspective view of a supporting device according to an embodiment of the invention, with a distance sensor;
- figure 11 is a plan view, from the top, of a component of the supporting device of figure 10;
- figure 12 is a plan view, from the bottom, of the component of figure 11; and
- figure 13 is a side view of the supporting device of figure 10, with a cross section along plane XIII-XIII of figure 11.

### BEST MODE FOR CARRYING OUT THE INVENTION

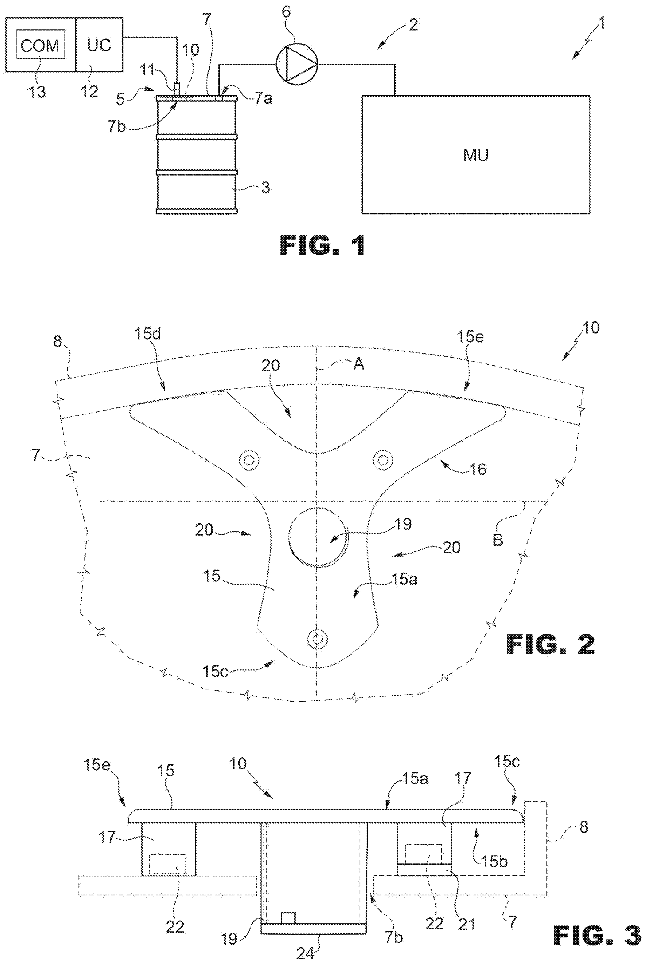

With reference to figure 1, number 1 indicates, as a whole, a machine tool provided with a supply system 2 to supply a machine tool with a fluid. The machine tool may be of any type, by way of non-limiting example a lathe, a mill, a drill or a planer.

The supply system 2 comprises a can 3 containing the fluid, a sensor assembly 5 to measure the level of the fluid inside the can 3 and a pump 6, which is operated by a known control system not shown herein.

The can 3 is a standard can manufactured according to an existing standard, for example ISO 15750-2. The can 3 has a lid 7 (shown with a broken line in figures 2 and 3) provided with a suction hole 7a, where a suction line 6a of the pump 6 is inserted, and a vent hole 7b. The lid 7, for example, is crimped to the side wall of the can 3 and has a peripheral circular margin 8, which projects in an axial direction, substantially extending as a prolongation of the side wall.

The sensor assembly 5 comprises a supporting device 10 (better shown in figures 2-4), an optical distance sensor 11 and a control unit 12, which is coupled to the distance sensor 11 and is provided with a communication module 13.

The control unit 12 is configured to process measurement signals SD obtained from the distance sensor 11 and to determine a filling level of the can 3 from the received measurement signals SD. The information on the filling level obtained from the measurement signals SD can be transmitted to a remote control station (not shown) through the communication module 13 and/or be displayed on a local screen or in a local control station (which are not shown, either).

With reference to figures 2-5, the supporting device 10 comprises a plate 15, which has an upper face 15a and a lower face 15b (figure 3) and is provided with a centring station 16, which is shaped so as to be coupled to the margin 8 of the can 3 (broken line in figure 2). The supporting device 10 further comprises supporting feet 17 and a seat 19.

The plate 15, for example, may be moulded from a plastic material or obtained through cutting of a metal sheet and has a three-lobe shape with a first lobe 15c, which extends along a longitudinal axis A, as well as a second lobe 15d and a third lobe 15e, which lie on respective half-planes opposite one another relative to the longitudinal axis A and both lie on a same half-plane opposite a half-plane containing the first lobe 15c relative to a transverse axis B, which is perpendicular to the longitudinal axis A. The plate 15 is symmetrical relative to the longitudinal axis A.

The centring structure 16 fits a portion of the margin 8 of the can 3. Therefore, the shape of the centring structure 16 may be selected based on the type of can with which the sensor assembly 5 has to be used, depending on the adopted standard. In particular, the centring structure 16 is defined by the second lobe 15d and by the third lobe 15e, which have respective distal ends fitting a portion of the margin 8 of the can 3. More precisely, the distal ends of the second lobe 15d and of the third lobe 15e are shaped as arcs of circles having a radius and a centre that are the same as a radius and a centre of the 3 can, respectively. In order to make it easier for it to be grabbed, the plate 15 has recesses 20 between the first lobe 15c and the second lobe 15d, between the first lobe 15c and the third lobe 15e and between the second lobe 15d and the third lobe 15e.

The first lobe 15c, the second lobe 15d and the third lobe 15e are each provided with a respective supporting foot 17. The supporting feet 17, which can be overmoulded on the plate 15 or be manufactured as separate pieces and assembled with the plate 15, extend from the lower face 15b of the plate 15 and are symmetrically arranged relative to the longitudinal axis A of the first lobe 15c. At least the supporting foot 17 of the first lobe 15c is adjustable in height, for example by a micrometric adjustment screw 21.

The supporting feet 17 comprise respective magnetic elements 22 to couple the plate 15 to the surface of the lid 7, which is normally made of a ferromagnetic material. The magnetic elements 22 may be fixed to the respective feet 17. Alternatively, the supporting feet 17 may entirely be made of a magnetic material.

The seat 19 is arranged, relative to the centring structure 16, so as to be in a position corresponding to the vent hole 7b of the lid 7 when the centring structure 16 is coupled to the margin 8 of the can 3. The seat 19 is defined by a tubular body projecting from the lower face 15b of the plate 15 for a distance exceeding the supporting feet 17 and may be overmoulded on the plate 15 or manufactured as a separate piece and subsequently joined to the plate 15. The seat 19 is shaped so as to receive the distance sensor 11 in an calibrated operative position relative to the plate 15 and is open so that the distance sensor 11 may be introduced through the upper face 15a. In particular, in the operative position the distance sensor 11 is substantially perpendicular to the plate 15. Furthermore, the positioning of the distance sensor 11 in the operative position is obtained through threaded coupling to the seat 19. Alternatively, the fitting of the distance sensor 11 could be obtained, for example, by a bayonet or snap coupling.

A cap 24 is arranged so as to close a lower end of the seat 19 and has an optical window 25, which is arranged so as to allow the light radiation coming from the outside, in particular from the side of the lower face 15b of the plate 15, to reach a sensitive area 11a of the distance sensor 11 when the latter is housed in the seat 19.

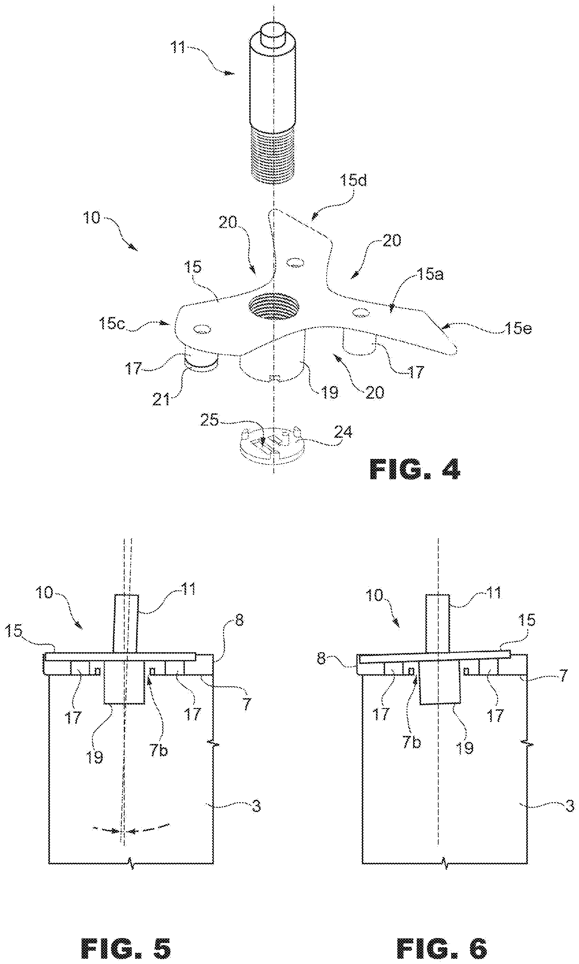

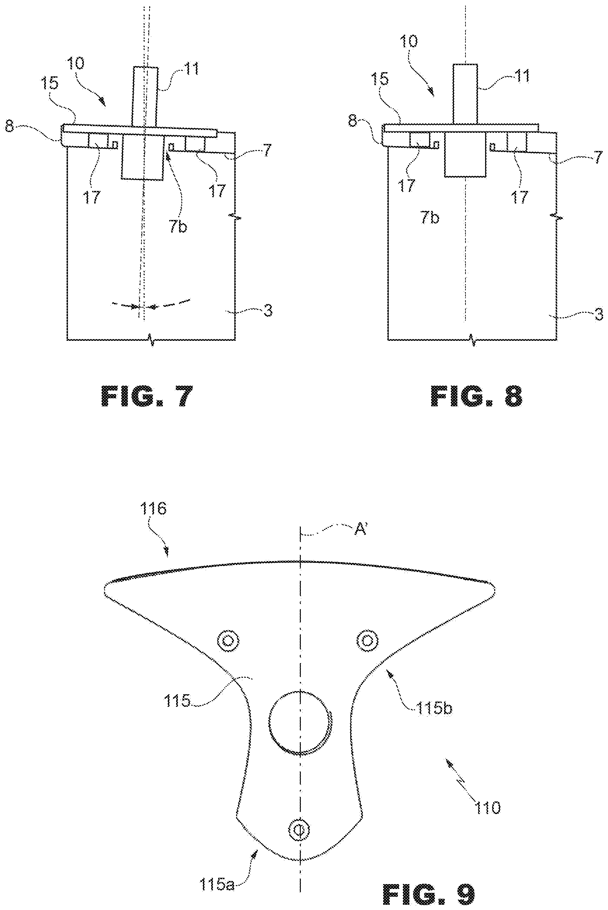

The supporting device 10 advantageously allows the distance sensor 11 to be placed in the correct operative position in an extremely quick, simple and precise manner, with no need to change the can 3. Indeed, the fact that the centring structure 16 complies with a standard offers a precise reference for the placement of the distance sensor 11 in the vent hole 7b of the can 3 with the optical axis correctly aligned. Possible residual alignment errors, for example due to tolerances in the coupling between the distance sensor 11 and the seat 19 (figure 5) or to a deformation of the lid 7 of the can 3 (figure 7), can easily be corrected through micrometric adjustment of the supporting feet 17 (figures 6 and 8, respectively). Furthermore, thanks to the basically symmetric arrangement relative to the longitudinal axis A, the height adjustment of the sole supporting feet 17 of the first lobe 15c usually is sufficient to obtain a precise adjustment of the angle of view. As a matter of fact, this adjustment allows the direction of observation of the distance sensor 11 to be moved away from the closest wall of the can 3.

The shape of the centring structure 16 shown in figures 2-4 has the advantage of facilitating the grabbing thereof, as already mentioned above, but this is not the only possible solution, as the structure simply needs to be coupled to reference elements that can be obtained from a can manufacturing standard. In the example of figure 9, a supporting device 110 comprises a plate 115 having a first lobe 115a and a second lobe 115b, which extend in opposite directions along a longitudinal axis A'. The second lobe 115b defines a centring structure 116 having a margin, which symmetrically extends relative to the longitudinal axis A' along a continuous arc of a circle having a centre and a radius coinciding with the centre and the radius of the lid of the can, respectively.

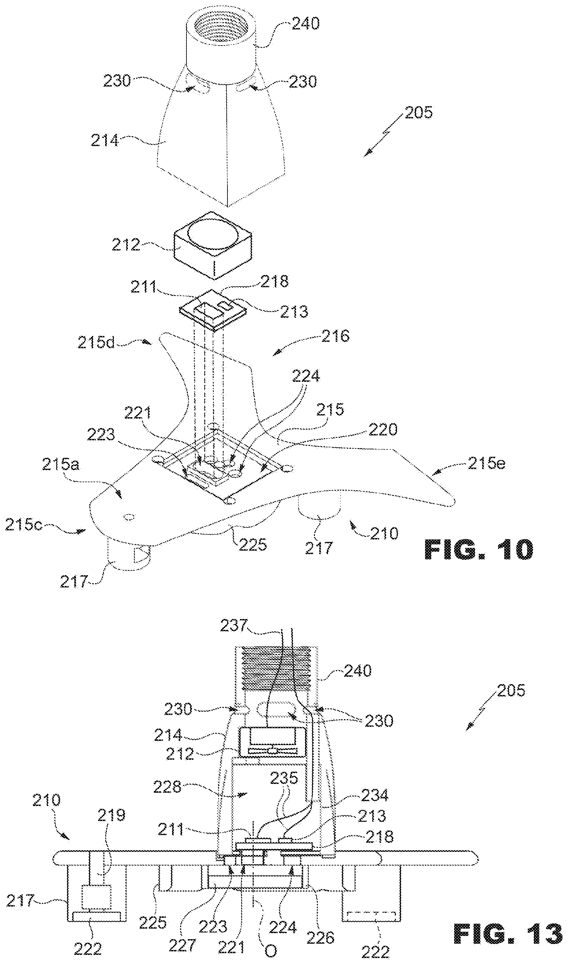

Figures 10-13, wherein parts that are the same as the ones already discussed above are indicated with the same reference numbers, show an embodiment of the invention, according to which a sensor assembly 205 comprises a supporting device 210, an optical distance sensor 211 and a fan 212. The sensor assembly 205 may further comprise possible further optional sensors 213, such as temperature, pressure or humidity sensors. The distance sensor 211 and the possible further sensors may be mounted on a same support 218, for example a printed circuit board, and are coupled to the control unit 12 of figure 1, which is provided with the communication module 13.

The supporting device 210 comprises a plate 215 with a three-lobe shape (figures 10-12), which is substantially shaped like the one of figures 2-8, has an upper face 215a and a lower face 215b and defines a centring structure 216, and a dome 214. In particular, the plate 215 has a first lobe 215c, which extends along a longitudinal axis A', as well as a second lobe 215d and a third lobe 215e, which lie on respective half-planes opposite one another relative to the longitudinal axis A' and both lie on a same half-plane opposite a half-plane containing the first lobe 215c relative to a transverse axis B', which is perpendicular to the longitudinal axis A'. The plate 215 is substantially symmetrical relative to the longitudinal axis A'.

The centring structure 216 adapts to a portion of the margin 8 of the can 3. Therefore, the shape of the centring structure 216 can be selected based on the type of can with which the sensor assembly 205 has to be used, depending on the adopted standard, for example ISO 15750-2. In particular, the centring structure 216 is defined by the second lobe 215d and the third lobe 215e, which have respective distal ends shaped as arcs of circles having a radius and a centre that are the same as a radius and a centre of the 3 can, respectively. Furthermore, the plate 215 has recesses 220 between the first lobe 215c and the second lobe 215d, between the first lobe 215c and the third lobe 215e and between the second lobe 215d and the third lobe 215e.

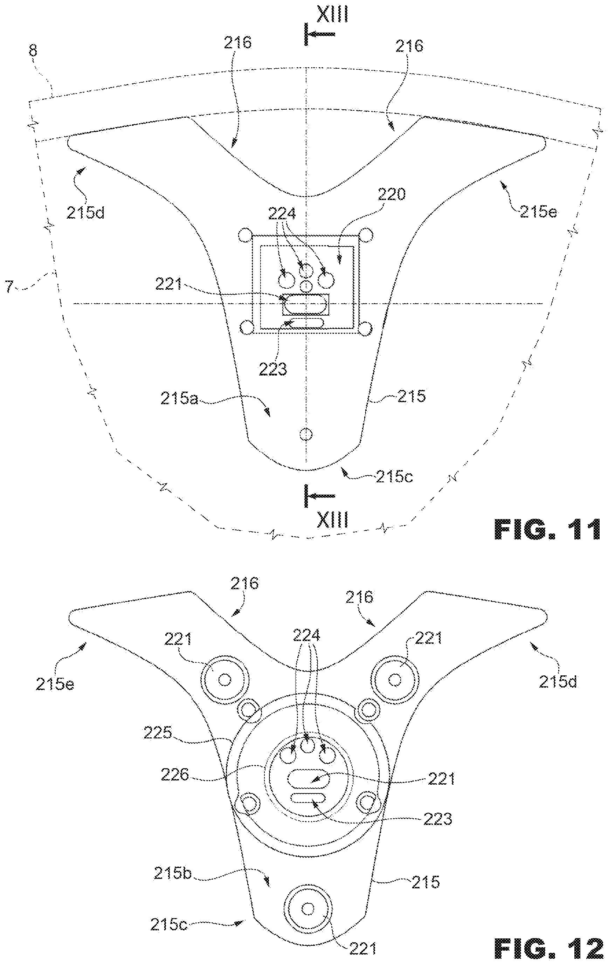

The lobes 215c-e are provided with respective supporting feet 217 (figure 12), which extend from the lower face 215a and can entirely be made of a magnetic material or, alternatively, be provided with respective magnetic elements 222 to couple the plate 215 to the surface of the lid 7. The supporting foot 217 of the first lobe 215c may be adjustable in height, for example by a micrometric adjustment screw 219.

A seat 220 (figure 11), which is defined on the upper face 215a of the plate 215, receives the distance sensor 211. Inside the seat 220, an optical window 221 is obtained through the entire thickness of the plate 215 so as to be in a position corresponding to the vent hole 7b of the lid 7 when the centring structure 216 is coupled to the margin 8 of the can 3. The seat 220 is configured to receive the distance sensor 211 in an calibrated operative position relative to the plate 215. In this way, the distance sensor 221 is optically coupled inside the can 3 with an optical axis O (figure 13) perpendicular to the faces 215a, 215b of the plate 215. Further through openings 223, 224, for example with a circular or oblong shape, extend from side to side of the plate 215 in the seat 220. The through openings 223, 224 communicate with the inside of the dome 214 and may be used to couple the possible further sensors 213 to the inside of the can 3 or as ventilation openings.

The lower face 215b of the plate 215 is provided with a ring 225 (figure 12), which projects therefrom, surrounds the optical window 221 and the through openings 223, 224 and is shaped so as to adhere to the edge of the vent hole 7b of the can 3. In an embodiment, the ring 225 has a circular shape and has a position and a diameter that are such as to allow for a sealed coupling to the edge of the vent hole 7b, which in standard ISO 15750-2 is ¾ of an inch. The sealed coupling prevents foreign bodies or dusts from entering the can and, furthermore, reduces both the quantity of light entering the can and possible optical light interferences during the measurement.

A further ring 226, which is concentric to the ring 225 and has a smaller diameter, surrounds the optical window 221 and the through openings 223, 224 and extends from the lower face 215b of the plate 215. The ring 226 may act as housing for an optical filter 227, which is optionally used to protect the distance sensor 221 and is transparent in the range of the wavelengths used by the distance sensor 221. The filter does not affect the measurements of the distance sensor 221 and prevents it from being exposed to vapours and oil mists.

The dome 214 (figures 10 and 13) is coupled to the plate 215 around the seat 220 of the distance sensor 211 and the optical window 221 and is fixed, for example, by screws or through pressure by feet engaging respective holes with interference. Therefore, the distance sensor 211 and the possible optional sensors 213 are enclosed in a cavity 228 inside the dome 214, which also houses the fan 212. More precisely, the fan 212 is arranged in the cavity 228 at an end of the dome 214 opposite the plate 215, where intake ports 230 are obtained. The fan 212 is arranged so as to suck, in use, air from the outside through the intake ports 230 and convey an air flow towards the inside the can 3 through the through openings 223, 224 that are free and available as ventilation openings. Furthermore, inside the dome 214 there is obtained a cable raceway 234, which houses the connection cables 235 used to connect the distance sensor 211 and the possible further sensors 213. The connection cables 233 can come out of the dome 214 together with the connection cables 237 of the fan 212 through a connector or cable clamp 240, for example a threaded one, obtained at the end of the dome 214 opposite the plate 215.

Finally, the device described and claimed herein can evidently be subjected to changes and variants, without for this reason going beyond the scope of protection set forth in the appended claims.

## Claims

1. A supporting device for a distance optical sensor comprising:
a plate (15; 115; 215) having an upper face (15a; 215a) and a lower face (15b; 215b) and provided with a centering structure (16; 116; 216) configured to couple to a margin (8) of a standard can (3) for industrial fluids;
an optical window (25; 221) formed in the plate (215) and arranged so that a distance optical sensor (11; 211) housed on the plate in a position corresponding to the optical window (25; 221) is accessible by light radiation through the optical window (25; 221);
a dome (214) and a seat (220) configured to receive a distance optical sensor (211) in a calibrated operative position with respect to the plate (15; 115), wherein the dome (214) is coupled to the plate (215) around the optical window (221);
wherein the centering structure (16; 116) is conformal to a portion of the margin (8) of the standard can (3) and the optical window (25; 221) is arranged, with respect to the centering structure (16; 116), so as to be in a position corresponding to a hole (7b) of the standard can (3) when the centering structure (16; 116) is coupled to the margin (8) of the standard can (3);
**characterized by** a fan (212) housed inside the dome (214) .

2. The device according to claim 1, wherein the plate (15; 215) has a first lobe (15c; 215c), extending along a longitudinal axis (A; A'), a second lobe (15d; 215d) and a third lobe (15e; 215e).

3. The device according to claim 2, wherein the first lobe (15c; 215c), the second lobe (15d; 215d) and the third lobe (15e; 215e) are provided with respective supporting feet (17), extending from the lower face (15b; 215b) of the plate (15; 215).

4. The device according to claim 3, wherein the supporting feet (17) are symmetrically arranged with respect to the longitudinal axis (A) of the first lobe (15c) and at least the supporting foot (17) of the first lobe (15c) is adjustable in height.

5. The device according to claim 3 or 4, wherein the supporting feet (17) comprise respective magnetic elements for coupling of the plate (15; 115) to a ferromagnetic material surface (7).

6. The device according to any one of claims 2 to 5, wherein the second lobe (15d) and the third lobe (15e) of the plate (15) define the centering structure (16) and have respective distal ends conformal to a portion of the margin (8) of the standard can (3).

7. The device according to claim 4, wherein the distal ends of the second lobe (15d) and of the third lobe (15e) are shaped as arcs of circles having radius and center respectively equal to a radius and a center of the margin (8) of the standard can (3).

8. The device according to any one of the preceding claims, wherein:
the plate (215) has through openings (223, 224) communicating with the inside of the dome (214);
the dome (214) is provided with intake ports (230) for the fan (212); and
the fan (212) is arranged within a cavity (228) inside the dome (214) at a distance from the plate (215) so as to suck air from the outside through the intake ports (230) and convey an airflow toward the inside of the standard can (3) through the openings (223, 224).

9. The device according to any one of the preceding claims, comprising a ring (225) projecting from the lower face (215b) of the plate (15; 115), surrounding the optical window (221) and shaped so as to adhere to an edge of the hole (7b) of the standard can (3).

10. The device according to claim 9, wherein the ring (225) has circular shape and has position and diameter such as to allow seal coupling with the edge the of the hole (7b) of the standard can (3) when the centering structure (16; 116) is coupled to the margin (8) of the standard can (3).

11. The device according to claim 10 as appended to claim 8, wherein the ring (225) surrounds the openings (223, 224) .

12. A sensor assembly comprising a supporting device (10; 110; 200) according to any one of the preceding claims, a distance optical sensor (11; 211) housed on the supporting device (10; 110; 200).

13. The sensor assembly according to claim 12, comprising a control unit (12) coupled to the distance optical sensor (11) and provided with a communication module (13) configured for remote transmission of information obtained from the distance optical sensor (11) , wherein the control unit (12) is configured to process measurement signals (SD) obtained from the distance optical sensor (11; 211) and to determine a filling level of the standard can (3) from the measurement signals (SD).

14. The sensor assembly according to claim 13, comprising one or more further sensors (223), including a temperature sensor, wherein the communication module (13) is coupled to the one or more further sensors (223) and is further configured for remote transmission of information obtained the one or more further sensors (223).

15. A machine tool comprising a fluid supply system (2), wherein the supply system (2) comprises:
a can (3) having a lid (7) having a hole (7b) and a projecting margin (8) around the lid (7); and
a sensor assembly (5) according to any one of claims 12 to 14 coupled to the margin (8) of the can (3) with the distance optical sensor (11) inserted in the hole (7b).

## Patentansprüche

1. Haltevorrichtung für einen optischen Abstandssensor, umfassend:
eine Platte (15; 115; 215), die eine obere Fläche (15a; 215a) und eine untere Fläche (15b; 215b) aufweist und mit einer Zentrierstruktur (16; 116; 216) versehen ist, die so konfiguriert ist, dass sie mit einem Rand (8) eines Standardbehälters (3) für industrielle Fluide gekoppelt werden kann;
ein optisches Fenster (25; 221), das in der Platte (215) ausgebildet und so angeordnet ist, dass ein optischer Abstandssensor (11; 211), der auf der Platte in einer dem optischen Fenster (25; 221) entsprechenden Position untergebracht ist, durch Lichtstrahlung durch das optische Fenster (25; 221) zugänglich ist;
eine Kuppel (214) und einen Sitz (220), die so konfiguriert sind, dass sie einen optischen Abstandssensor (211) in einer kalibrierten Betriebsposition in Bezug auf die Platte (15; 115) aufnehmen können, wobei die Kuppel (214) mit der Platte (215) um das optische Fenster (221) herum gekoppelt ist;
wobei die Zentrierstruktur (16; 116) mit einem Teil des Randes (8) des Standardbehälters (3) konform ist und das optische Fenster (25; 221) in Bezug auf die Zentrierstruktur (16; 116) so angeordnet ist, dass es sich in einer Position befindet, die einem Loch (7b) des Standardbehälters (3) entspricht, wenn die Zentrierstruktur (16; 116) mit dem Rand (8) des Standardbehälters (3) gekoppelt ist;
**gekennzeichnet durch** einen Lüfter (212), der im Inneren der Kuppel (214) untergebracht ist.

2. Vorrichtung nach Anspruch 1, wobei die Platte (15; 215) einen ersten Lappen (15c; 215c), der sich entlang einer Längsachse (A; A') erstreckt, einen zweiten Lappen (15d; 215d) und einen dritten Lappen (15e; 215e) aufweist.

3. Vorrichtung nach Anspruch 2, wobei der erste Lappen (15c; 215c), der zweite Lappen (15d; 215d) und der dritte Lappen (15e; 215e) mit jeweiligen Stützfüßen (17) versehen sind, die sich von der Unterseite (15b; 215b) der Platte (15; 215) aus erstrecken.

4. Vorrichtung nach Anspruch 3, wobei die Stützfüße (17) symmetrisch zur Längsachse (A) des ersten Lappens (15c) angeordnet sind und zumindest der Stützfuß (17) des ersten Lappens (15c) höhenverstellbar ist.

5. Vorrichtung nach Anspruch 3 oder 4, wobei die Stützfüße (17) jeweils magnetische Elemente zur Kopplung der Platte (15; 115) mit einer ferromagnetischen Materialoberfläche (7) umfassen.

6. Vorrichtung nach einem der Ansprüche 2 bis 5, wobei der zweite Lappen (15d) und der dritte Lappen (15e) der Platte (15) die Zentrierstruktur (16) definieren und jeweils distale Enden aufweisen, die mit einem Teil des Randes (8) des Standardbehälters (3) konform sind.

7. Vorrichtung nach Anspruch 4,wobei die distalen Enden des zweiten Lappens (15d) und des dritten Lappens (15e) als Kreisbögen geformt sind, deren Radius und Mittelpunkt jeweils gleich einem Radius und einem Mittelpunkt des Randes (8) des Standardbehälters (3) sind.

8. Vorrichtung nach einem der vorhergehenden Ansprüche, wobei:
die Platte (215) Durchgangsöffnungen (223, 224) aufweist, die mit der Innenseite der Kuppel (214) in Verbindung stehen;
die Kuppel (214) mit Ansaugöffnungen (230) für das Gebläse (212) versehen ist; und
das Gebläse (212) in einem Hohlraum (228) innerhalb der Kuppel (214) in einem Abstand von der Platte (215) angeordnet ist, um Luft von außen durch die Ansaugöffnungen (230) anzusaugen und einen Luftstrom durch die Öffnungen (223, 224) in das Innere des Standardbehälters (3) zu leiten.

9. Vorrichtung nach einem der vorhergehenden Ansprüche, umfassend einen Ring (225), der von der Unterseite (215b) der Platte (15; 115) vorsteht, das optische Fenster (221) umgibt und so geformt ist, dass er an einem Rand des Lochs (7b) des Standardbehälters (3) haftet.

10. Vorrichtung nach Anspruch 9, wobei der Ring (225) kreisförmig ist und eine solche Position und einen solchen Durchmesser aufweist, dass er eine dichtende Verbindung mit dem Rand des Lochs (7b) des Standardbehälters (3) ermöglicht, wenn die Zentrierstruktur (16; 116) mit dem Rand (8) des Standardbehälters (3) verbunden ist.

11. Vorrichtung nach Anspruch 10 in Verbindung mit Anspruch 8, wobei der Ring (225) die Öffnungen (223, 224) umgibt.

12. Sensoranordnung mit einer Haltevorrichtung (10; 110; 200) nach einem der vorhergehenden Ansprüche, einem optischen Abstandssensor (11; 211), der auf der Haltevorrichtung (10; 110; 200) untergebracht ist.

13. Sensoranordnung nach Anspruch 12, umfassend eine Steuereinheit (12), die mit dem optischen Abstandssensor (11) gekoppelt und mit einem Kommunikationsmodul (13) versehen ist, das zur Fernübertragung von vom optischen Abstandssensor (11) erhaltenen Informationen konfiguriert ist, wobei die Steuereinheit (12) 15 konfiguriert ist, um vom optischen Abstandssensor (11; 211) erhaltene Messsignale (SD) zu verarbeiten und aus den Messsignalen (SD) einen Füllstand des Standardbehälters (3) zu bestimmen.

14. Sensoranordnung nach Anspruch 13, umfassend einen oder mehrere weitere Sensoren (223), einschließlich eines Temperatursensors, wobei das Kommunikationsmodul (13) mit dem einen oder den mehreren weiteren Sensoren (223) gekoppelt und außerdem für die Fernübertragung von Informationen konfiguriert ist, die der eine oder die mehreren weiteren Sensoren (223) erhalten haben.

15. Maschinenwerkzeug, umfassend ein Fluidzufuhrsystem (2), wobei das Zufuhrsystem (2) umfasst:
einen Behälter (3) mit einem Deckel (7), der ein Loch (7b) hat, und einem vorstehenden Rand (8) um den Deckel (7); und
eine Sensoranordnung (5) nach einem der Ansprüche 12 bis 14, die mit dem Rand (8) des Behälters (3) gekoppelt ist, wobei der optische Abstandssensor (11) in das Loch (7b) eingesetzt ist.

## Revendications

1. Dispositif de soutien destiné à un capteur optique de distance comprenant :
une plaque (15 ; 115 ; 215) ayant une face supérieure (15a ; 215a) et une face inférieure (15b ; 215b) et pourvue d'une structure de centrage (16 ; 116 ; 216) configurée pour se relier à une marge (8) d'un bidon standard (3) pour fluides industriels ;
une fenêtre optique (25 ; 221) formée dans la plaque (215) et disposée de manière à ce qu'un capteur optique de distance (11 ; 211) logé sur la plaque dans une position correspondant à la fenêtre optique (25 ; 221) soit accessible par rayonnement lumineux à travers la fenêtre optique (25 ; 221) ;
un dôme (214) et un siège (220) configurés pour recevoir un capteur optique de distance (211) dans une position opérationnelle calibrée par rapport à la plaque (15 ; 115), dans lequel le dôme (214) est couplé à la plaque (215) autour de la fenêtre optique (221) ;
dans lequel la structure de centrage (16 ; 116) est conforme à une partie de la marge (8) du bidon standard (3) et la fenêtre optique (25 ; 221) est disposée, par rapport à la structure de centrage (16 ; 116), de manière à se trouver dans une position correspondant à un trou (7b) du bidon standard (3) lorsque la structure de centrage (16 ; 116) est couplée à la marge (8) du bidon standard (3) ;
**caractérisé par** un ventilateur (212) logé à l'intérieur du dôme (214).

2. Dispositif selon la revendication 1, dans lequel la plaque (15 ; 215) a un premier lobe (15c ; 215c), s'étendant le long d'un axe longitudinal (A ; A'), un deuxième lobe (15d ; 215d) et un troisième lobe (15e ; 215e).

3. Dispositif selon la revendication 2, dans lequel le premier lobe (15c ; 215c), le deuxième lobe (15d ; 215d) et le troisième lobe (15e ; 215e) sont pourvus de pieds de support (17) respectifs, s'étendant à partir de la face inférieure (15b ; 215b) de la plaque (15 ; 215).

4. Dispositif selon la revendication 3, dans lequel les pieds de support (17) sont disposés symétriquement par rapport à l'axe longitudinal (A) du premier lobe (15c) et au moins le pied de support (17) du premier lobe (15c) est réglable en hauteur.

5. Dispositif selon la revendication 3 ou 4, dans lequel les pieds de support (17) comprennent des éléments magnétiques respectifs pour le couplage de la plaque (15 ; 115) à une surface de matériau ferromagnétique (7).

6. Dispositif selon l'une des revendications 2 à 5, dans lequel le deuxième lobe (15d) et le troisième lobe (15e) de la plaque (15) définissent la structure de centrage (16) et ont des extrémités distales respectives conformes à une partie de la marge (8) du bidon standard (3).

7. Dispositif selon la revendication 4, dans lequel les extrémités distales du deuxième lobe (15d) et du troisième lobe (15e) ont la forme d'arcs de cercle dont le rayon et le centre sont respectivement égaux à un rayon et un centre de la marge (8) du bidon standard (3).

8. Dispositif selon l'une quelconque des revendications précédentes, dans lequel :
la plaque (215) a des ouvertures traversantes (223, 224) communiquant avec l'intérieur du dôme (214) ;
le dôme (214) est pourvu d'orifices d'admission (230) pour le ventilateur (212) ; et
le ventilateur (212) est disposé dans une cavité (228) à l'intérieur du dôme (214) à une certaine distance de la plaque (215) de manière à aspirer l'air de l'extérieur par les orifices d'admission (230) et à acheminer un flux d'air vers l'intérieur du bidon standard (3) par les ouvertures (223, 224).

9. Dispositif selon l'une quelconque des revendications précédentes, comprenant un anneau (225) faisant saillie de la face inférieure (215b) de la plaque (15 ; 115), entourant la fenêtre optique (221) et formé de manière à adhérer à un bord du trou (7b) du bidon standard (3).

10. Dispositif selon la revendication 9, dans lequel l'anneau (225) a une forme circulaire et a une position et un diamètre de manière à permettre un couplage étanche avec le bord du trou (7b) du bidon standard (3) lorsque la structure de centrage (16 ; 116) est couplée à la marge (8) du bidon standard (3) .

11. Dispositif selon la revendication 10 telle qu'annexée à la revendication 8, dans lequel l'anneau (225) entoure les ouvertures (223, 224).

12. Ensemble de capteurs comprenant un dispositif de soutien (10 ; 110 ; 200) selon l'une quelconque des revendications précédentes, un capteur optique de distance (11 ; 211) logé sur le dispositif de soutien (10 ; 110 ; 200).

13. Ensemble de capteurs selon la revendication 12, comprenant une unité de commande (12) couplée au capteur optique de distance (11) et pourvue d'un module de communication (13) configuré pour la transmission à distance des informations obtenues du capteur optique de distance (11), dans lequel l'unité de commande (12) est configurée pour traiter les signaux de mesure (SD) obtenus du capteur optique de distance (11 ; 211) et pour déterminer un niveau de remplissage du bidon standard (3) à partir des signaux de mesure (SD).

14. Ensemble de capteurs selon la revendication 13, comprenant un ou plusieurs autres capteurs (223), y compris un capteur de température, dans lequel le module de communication (13) est couplé à un ou plusieurs autres capteurs (223) et est en outre configuré pour la transmission à distance des informations obtenues par les un ou plusieurs autres capteurs (223) .

15. Machine-outil comprenant un système d'alimentation en fluide (2), dans lequel le système d'alimentation (2) comprend :
un bidon (3) ayant un couvercle (7) avec un trou (7b) et une marge saillante (8) autour du couvercle (7) ; et
un ensemble de capteurs (5) selon l'une quelconque des revendications 12 à 14, couplé à la marge (8) du bidon (3), le capteur optique de distance (11) étant inséré dans le trou (7b).
